**Europäisches Patentamt**

**European Patent Office**

**Office européen des brevets**

(19)

(11) Veröffentlichungsnummer : **0 524 541 B1**

(12) # EUROPÄISCHE PATENTSCHRIFT

(45) Veröffentlichungstag der Patentschrift :
**11.10.95 Patentblatt 95/41**

(51) Int. Cl.$^6$ : **H04L 25/03**

(21) Anmeldenummer : **92112091.1**

(22) Anmeldetag : **15.07.92**

(54) **Adaptiver Frequenzbereichsentzerrer für Digital-Richtfunksysteme.**

(30) Priorität : **25.07.91 DE 4124709**

(43) Veröffentlichungstag der Anmeldung :
**27.01.93 Patentblatt 93/04**

(45) Bekanntmachung des Hinweises auf die
Patenterteilung :
**11.10.95 Patentblatt 95/41**

(84) Benannte Vertragsstaaten :
**BE CH DE GB LI NL**

(56) Entgegenhaltungen :
**EP-A- 0 268 842**

(56) Entgegenhaltungen :
**TWENTY-THIRD ASILOMAR CONFERENCE
ON SIGNALS, SYSTEMS & COMPUTERS, 30
OCT-1 NOV 1989, PACIFIC GROVE, CA, US
Bd.2, Seiten 687 - 691 READY M. ET AL.:
'ARCHITECTURE COSIDERATIONS FOR FRE-
QUENCY DOMAIN ADAPTIVE EQUALIZERS'
PATENT ABSTRACTS OF JAPAN vol. 13, no.
421 (E-822)19. September 1989 & JP-A-11 57
629 (FUJITSU) 20. JUNI 1989**

(73) Patentinhaber : **SIEMENS
AKTIENGESELLSCHAFT
Wittelsbacherplatz 2
D-80333 München (DE)**

(72) Erfinder : **Lankl, Berthold, Dr.-Ing.
Dietramszeller Platz 5
W-8000 München 70 (DE)**
Erfinder : **Sebald, Geord, Dipl.-Ing.
Mäuselweg 19
W-8000 München 70 (DE)**
Erfinder : **de Man, Erik, Dipl.-Ing.
Curd-Jürgens-Strasse 30
W-8000 München 83 (DE)**

EP 0 524 541 B1

**Beschreibung**

Die Erfindung bezieht sich auf einen adaptiven Frequenzbereichsentzerrer für Digital-Richtfunksysteme, bei dem ein Transversalfilter mit einstellbaren Koeffizienten und Mittel zur Spektrumsauswertung zur Einstellung der Koeffizienten vorgesehen sind.

Die bei der Richtfunkübertragung auftretenden, durch Mehrwegeausbreitung verursachten frequenzselektiven Verzerrungen führen zu Intersymbolstörungen und damit zu einer Beeinträchtigung der Signalübertragung. Üblicherweise werden bei höherstufigen QAM-Verfahren gegen solche frequenzselektiven Fading-Ereignisse adaptive Zeitbereichsentzerrer eingesetzt, die die Verzerrungen wieder reduzieren. Im Fall des Einsatzes sogenannter Baudspaced-Equalizer in Verbindung mit kleinen Rolloff-Faktoren der verwendeten Pulsformung sind durch zusätzliche adaptive Frequenzbereichsentzerrer, die Schräglagen im Empfangsspektrum adaptiv kompensieren, noch deutliche Verbesserungen der System-Performance (Signatur) bei derartigen frequenzselektiven Fading-Ereignissen möglich.

Solche Schräglagenentzerrer wurden bisher als Analogschaltungen im Zwischenfrequenzbereich realisiert, wobei beispielsweise das Stellglied aus zwei gegeneinander verstimmten Schwingkreisen aufgebaut ist und die Regelung üblicherweise mit Hilfe von Sondenfiltern oberhalb und unterhalb der Spektrumsmittenfrequenz erfolgt.

In der EP-A-0 268 842 ist ein adaptiver Frequenzbereichsentzerrer der eingangs genannten Art beschrieben, bei dem ein Transversalfilter im Zwischenfrequenzbereich als Stellglied und Sondenfilter, die im Basisband realisiert sind, vorgesehen sind.

Der Erfindung liegt die Aufgabe zugrunde, eine Lösung anzugeben für eine volldigitale Ausführung eines adaptiven Frequenzbereichsentzerrers.

Diese Aufgabe wird gemäß der Erfindung gelöst durch seine digitale Realisierung im äquivalenten Tiefpaßbereich mit Hilfe eines Transversalfilters mit einer Laufzeit zwischen aufeinanderfolgenden Abgriffen von $\tau = T/2$ und durch eine mit ihm verbundene Steuerschaltung zur Einstellung des Stellgliedes des Transversalfilters mit Meßsonden für unterschiedliche Spektralanteile, zu deren Realisierung Schaltelemente eingesetzt werden, die einen für die Messung verwendeten DFT-Algorithmus (Discrete Fourier Transform) implementieren.

Vorteilhafte Ausgestaltungen und Weiterbildungen des Erfindungsgegenstandes sind in den abhängigen Ansprüchen angegeben.

Nachstehend wird die Erfindung anhand von in der Zeichnung dargestellten Ausführungsbeispielen näher erläutert.

Es zeigen:

Figur 1    eine Empfangsschaltung (Demodulator) im Blockschaltbild,

Figur 2    einen linearphasigen Schräglagenentzerrer im Zwischenfrequenzbereich,

Figur 3    einen linearphasigen Schräglagenentzerrer im äquivalenten Tiefpaßbereich,

Figur 4    das Spektrum des abgetasteten Empfangssignals,

Figur 5    eine Transversalfilterrealisierung des DFT-Algorithmus zur Ermittlung einer Spektrallinie bei $f_S/4$,

Figur 6a    das Betragsquadrat der Übertragungsfunktionen der DFT für $f_S/4$ und $3f_S/4$,

Figur 6b    ZF-Spektrum und Lage der Sondenfilter,

Figur 7    die Realisierung der Sondenfilter im äquivalenten Tiefpaßbereich,

Figur 8    eine aus Figur 7 abgeleitete vereinfachte Auswerteschaltung,

Figur 9    eine dezimierende Ausführung eines Schräglagenentzerrers und

Figur 10    Signaturen für ein 64-QAM-System mit einem 9-Tap-Zeitbereichsentzerrer (ATDE), das

a) ohne Schräglagenentzerrer und

b) mit volldigital realisiertem Schräglagenentzerrer ausgestattet ist.

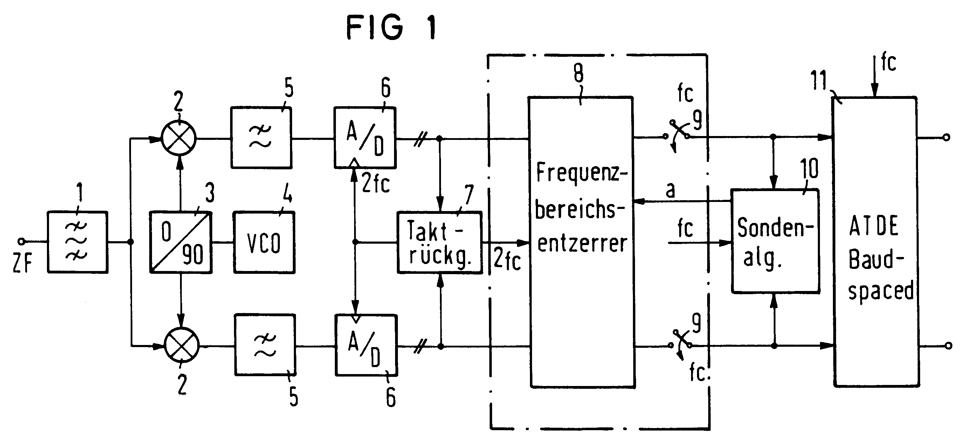

Am Eingang der Empfangsschaltung gemäß Figur 1 liegt ein ZF-Signal an, das über einen Bandpaß 1 geführt und danach auf zwei Leitungszweige aufgeteilt wird. Diese enthalten jeweils einen Mischer 2, denen ein Oszillatorsignal mit 90°-Phasenverschiebung zueinander zugeführt wird. Den Mischern 2 nachgeschaltet sind jeweils ein Tiefpaß 5 und ein A/D-Wandler 6. Diese sind mit einer Taktrückgewinnung 7 verbunden, die ein Signal mit doppelter Taktfrequenz ($2f_c$) liefert. Nachfolgend im Übertragungsweg ist ein Frequenzbereichsentzerrer 8 eingeschaltet, in dessen Ausgangszweigen Schaltelemente 9 angeordnet sind, die mit der Taktfrequenz $f_c$ umgeschaltet werden. Dem Frequenzbereichsentzerrer 8 ist ein Zeitbereichsentzerrer 11 nachgeschaltet. Zugleich sind die ausgangsseitigen Leitungszweige des Frequenzbereichsentzerrers 8 mit einer Steuerschaltung 10 verbunden, die den Koeffizienten a für die Einstellung des Frequenzbereichsentzerrers 8 liefert.

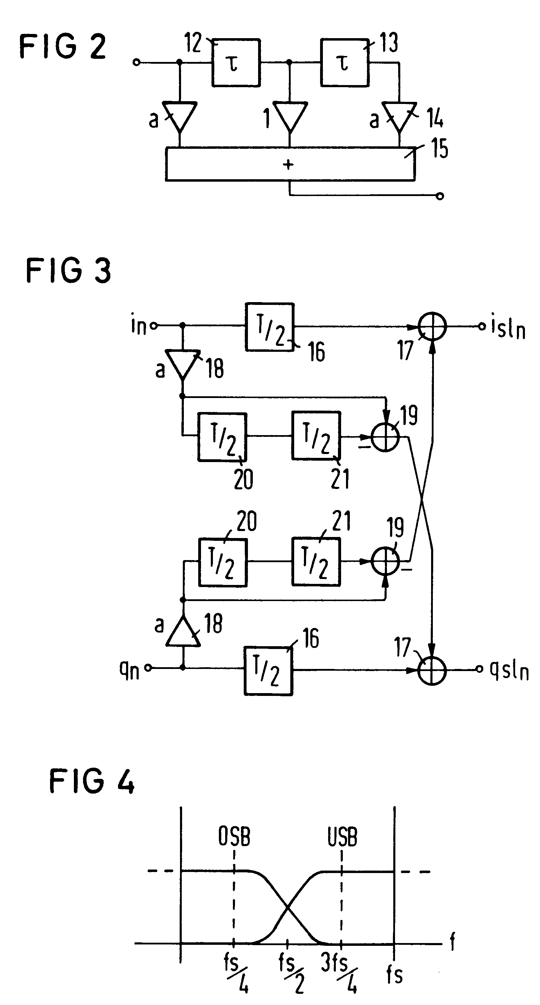

Figur 2 zeigt einen linearphasigen Schräglagenentzerrer im Zwischenfrequenzbereich. Dieser besteht aus

2

einem Transversalfilter, bei dem eine Anzahl von Laufzeitgliedern 12, 13 mit der Laufzeit $\tau$ in Kette geschaltet sind und an den Abgriffen der Laufzeitglieder Bewertungsglieder 14 (Multiplizierer) angeschlossen sind, die mit den Eingängen eines Summierers 15 verbunden sind. Der Summierer 15 ist durch ein (+) kenntlich gemacht, die Bewertungsglieder haben die Koeffizienten "a", "1" und "a". Die Übertragungsfunktion S (f) eines solchen Frequenzbereichsentzerrers ergibt sich wie folgt:

$$S(f) \;=\; a \;+\; e^{-j2\pi f\tau} \;+\; a.e^{-j4\pi f\tau} \qquad (1)$$

Die Laufzeit $\tau$ ist dabei so zu wählen, daß die Spektrumsmittenfrequenz genau auf den Flanken der Übertragungsfunktion liegt. Dann kann durch Variation des Koeffizienten a eine eventuelle Schräglage des Empfangsspektrums korrigiert werden.

Der Weg der Realisierung eines solchen Entzerrers im Basisband führt erfindungsgemäß über eine äquivalente Realisierung im Tiefpaßbereich (vgl. Figur 3). Die Laufzeit wird dabei mit $\tau = T/2$ gewählt. Dies ergibt ein in einer digitalen Realisierung erforderliches ganzzahliges Verhältnis zur Baudrate $f_C = 1/T$ des Systems.

Für die Übertragungsfunktion des Schräglagenentzerrers in einer äquivalenten Realisierung im Tiefpaßbereich ergibt sich dann

$$S_T(f) \;=\; S(f + f_{ZF})$$
$$=\; a - j.(-1)^n.e^{-j\pi fT} - a.e^{-j2\pi fT} \qquad (2)$$

Das in Figur 3 gezeigte Schaltbild eines linearphasigen Schräglagenentzerrers im äquivalenten Tiefpaßbereich enthält im I- und Q-Signalweg (Kanal) jeweils ein Laufzeitglied 16 mit der Laufzeit $\tau = T/2$ und ein Summierglied 17. Die beiden Summierglieder 17 sind zudem über einen Querpfad mit dem Eingang des jeweils anderen Kanal-Signalwegs verbunden. Der Querpfad enthält jeweils ein Bewertungsglied 18 mit dem Koeffizienten a und nachfolgend eine an ein Subtraktionsglied 19 geführte Parallelschaltung aus zwei in Reihe liegenden Laufzeitgliedern 20, 21 mit der Laufzeit $\tau = T/2$ und einer Direktverbindung.

Zur Ermittlung eines Kriteriums für die Schräglage im empfangenen Spektrum werden in einer analogen Realisierung im Zwischenfrequenzbereich zwei Sondenfilter bei einer Frequenz oberhalb und unterhalb der Spektrumsmittenfrequenz verwendet. Auf das Basisband übertragen wird erfindungsgemäß für eine solche Messung ein DFT-Algorithmus (Discrete Fourier Transform) verwendet. Eine besonders aufwandsgünstige Ausbildung besteht in einer 4-Punkte-DFT. Hierbei treten als Koeffizienten nur $\pm 1$ und $\pm j$ auf, die einfach als Addierer und Subtrahierer zu realisieren sind.

Für eine N-Punkte-DFT gilt:

$$G\left[\frac{n}{N \cdot \Delta t}\right] \;=\; \sum_{k=0}^{N-1} g(k.\Delta t).e^{-j2\pi nk/N} \qquad (3)$$

für die Abstände zwischen den Spektrallinien gilt:

$$\Delta f \;=\; \frac{1}{N.\Delta t} \qquad (4)$$

mit $\Delta t$ als Abstand aufeinanderfolgender Abtastwerte.

Aus Realisierungsgesichtspunkten (Verarbeitungsgeschwindigkeit) ist eine Verarbeitung von Abtastwerten im Baudraster $\Delta t = T$ vorteilhaft. Für den Abstand der Spektrallinien gilt damit $\Delta f = f_C/4$. Für $n = 1$ erhält man nun Spektralanteile oberhalb der Spektrumsmittenfrequenz und für $n = 3$ entsprechend unterhalb (vgl. hierzu Figur 4, in der die Spektren des abgetasteten Empfangssignals dargestellt sind). Die DFT liefert jedoch nur im Fall periodischer Zeitfunktionen ein gültiges Linienspektrum. Für den Fall der hier vorliegenden Datensignale ist diese Periodizität nicht vorhanden, und es ist deshalb das Übertragungsverhalten des DFT-Algorithmus im Spektralbereich zu betrachten. Die DFT in Gleichung (3) verarbeitet im zeitlichen Abstand $\Delta t$ aufeinanderfolgende Abtastwerte, was auch als die Signalverarbeitung in einem Transversalfilter interpretiert werden kann.

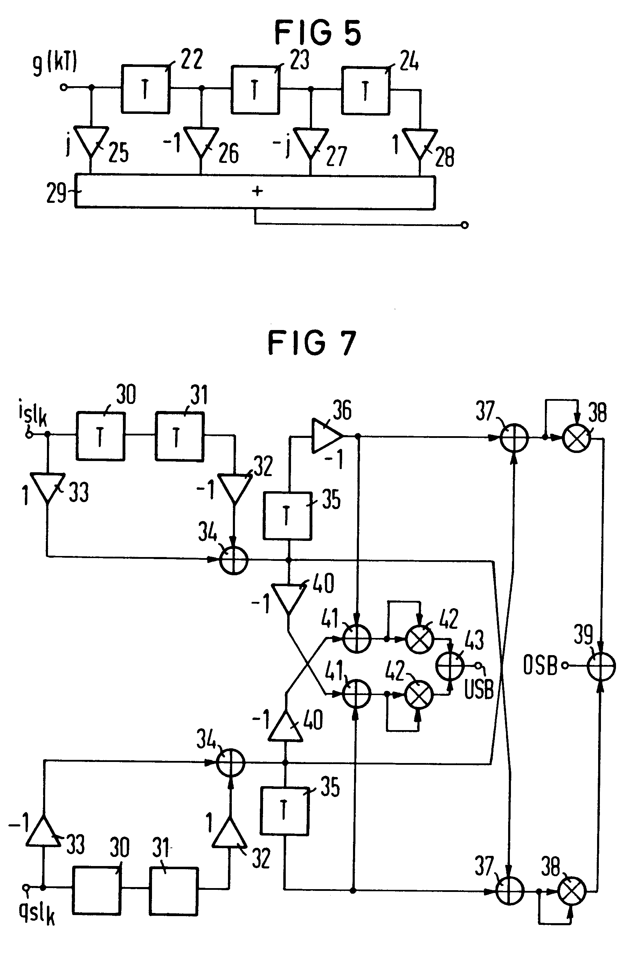

Eine Transversalfilterrealisierung des DFT-Algorithmus zur Ermittlung einer Spektrallinie bei $f_C/4$ zeigt Figur 5. Bei dieser Anordnung sind drei Laufzeitglieder 22, 23, 24 mit der Laufzeit $\tau = T$ in Kette geschaltet, deren Abgriffe mit Bewertungsgliedern 25..28 mit den Koeffizienten j, -1, -j, 1 verbunden sind, die ausgangsseitig an einen Summierer 29 angeschlossen sind.

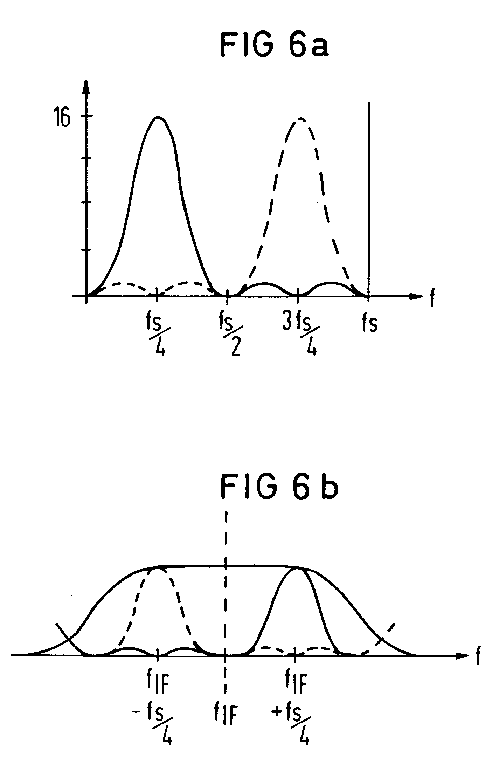

Die der Transversalfilterrealisierung zugehörigen Betragsquadrate der Übertragungsfunktionen der DFT für $f_C/4$ und $3f_C/4$ zeigt Figur 6a. Das über der Frequenz aufgetragene Betragsquadrat ist für das Oberband mit einer ausgezogenen Linie, für das Unterband strichliert aufgetragen. Sie stellen sehr gut brauchbare Sondenfilter dar (Figur 6b).

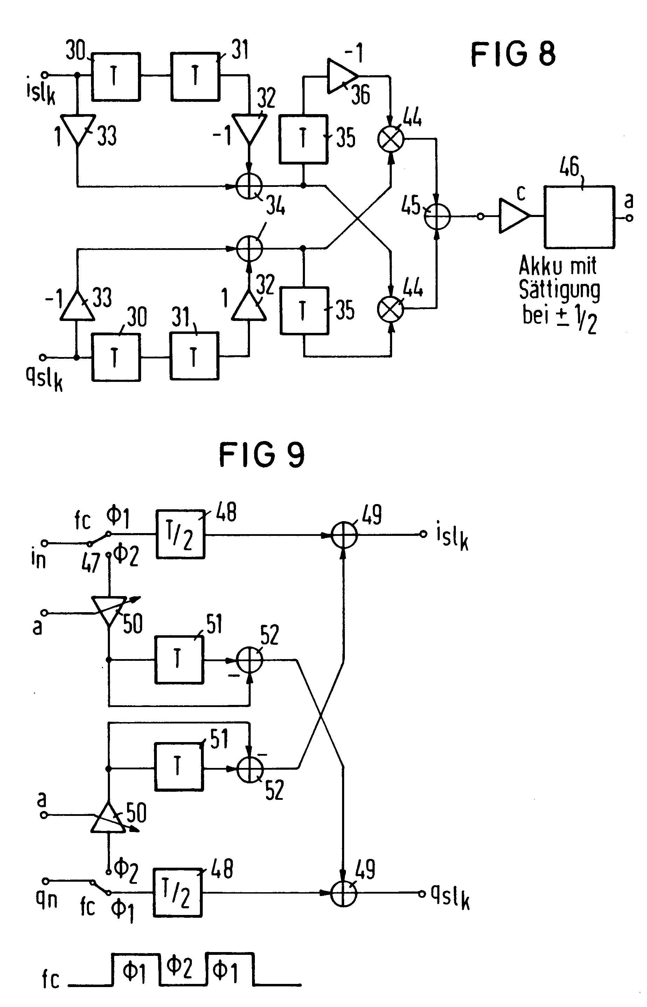

Eine entsprechende Realisierung der beiden Sondenfilter im äquivalenten Tiefpaßbereich ist in Figur 7 dargestellt. Dabei sind in den gleichartig ausgebildeten I- und Q-Signalwegen (Kanälen) eingangsseitig jeweils zwei Laufzeitglieder 30, 31 mit der Laufzeit $\tau = T$ und ein Bewertungsglied 32 mit dem Koeffizienten -1 in Reihe und dazu ein Bewertungsglied 33 mit dem Koeffizienten 1 parallelgeschaltet, wobei die Bewertungsglieder mit dem Faktor +1 oder -1 bei der praktischen Realisierung meistens als direkte Verbindung realisiert werden können. Ausgangsseitig sind die beiden parallelen Zweige an einen Summierer 34 angeschlossen. Dessen Ausgang ist zum einen über ein Laufzeitglied 35 mit der Laufzeit $\tau = T$ und im I-Signalweg zusätzlich mit einem Bewertungsglied 36 mit dem Koeffizienten -1 an Summierer 37 geführt, die mit einem weiteren Eingang mit dem Ausgang des Summierers 34 des jeweils anderen Signalweges verbunden sind. Zum anderen ist der Ausgang der Summierer 34 über ein Bewertungsglied 40 mit dem Koeffizienten -1 jeweils mit einem Summierer 41 verbunden, denen zugleich auch das Signal des jeweils anderen Übertragungsweges, abgezweigt vor dem Summierer 37, zugeführt wird. Die Summierer 37 bzw. 41 sind ausgangsseitig über jeweils einen als Quadrierer geschalteten Multiplizierer 38 bzw. 42 an einen weiteren Summierer 39 bzw. 43 geführt, denen die Momentanleistung des oberen bzw. unteren Sondenfilters entnehmbar ist.

Als Regelkriterium wird die Leistungsdifferenz der beiden Sondenfiltersignale verwendet. Durch die Verwendung der Differenz kann die Auswerteschaltung, die den Koeffizienten a für die Einstellung des Schräglagenentzerrers liefert, vereinfacht werden, was für den Gesamtschaltungsaufbau sehr vorteilhaft ist. Die vereinfachte Schaltung ist in Figur 8 dargestellt. Die Schaltungsteile zur Ableitung der Momentanleistung des oberen und unteren Sondenfilters entfallen dabei. Die miteinander verkoppelten Signalwege des I- und Q-Kanals sind vom Ausgang der Summierer 34 direkt bzw. über die Laufzeitglieder 35 und das Bewertungsglied 36 im I-Kanal an Multiplizierer 44 geführt, deren Ausgang an einen weiteren Summierer 45 angeschlossen ist. Diesem ist ein Akkumulator 46 nachgeschaltet, in dem die Leistungsdifferenz aufintegriert wird und dessen Ausgangswert den Koeffizienten a für den Frequenzbereichsentzerrer liefert, wobei mit der Akku-Konstante c die Bandbreite der Regelschleife eingestellt werden kann. Für gleiche Schaltungselemente in den Figuren 7 und 8 sind gleiche Bezugszeichen verwendet.

Da auch der dem Frequenzbereichsentzerrer 8 in Figur 1, im speziellen Fall ein Schräglagenentzerrer, nachfolgende adaptive Zeitbereichsentzerrer 11 nur Abtastwerte im Baudraster T verarbeitet, kann der Frequenzbereichsentzerrer in vorteilhafter Weise dezimierend ausgelegt werden. Eine solche Ausführung ist in Figur 9 dargestellt. Das Eingangssignal von I- und Q-Signalweg gelangt über einen Umschalter 47, der mit der Frequenz $f_C$ zwischen den Schaltzuständen $\phi_1$ und $\phi_2$ umschaltet, zum einen über ein Laufzeitglied 48 mit der Laufzeit $\tau = T/2$ zu einem Summierer 49 bzw. über ein Bewertungsglied 50 mit dem Koeffizienten a und eine ausgangsseitig an einen Subtrahierer 52 angeschlossene Parallelschaltung aus einem Laufzeitglied 51 mit der Laufzeit $\tau = T$ und einer Direktverbindung an das Summierglied 49 des jeweils anderen Signalweges (Q-Kanal bzw. I-Kanal). Das Ausgangssignal der Summierer 49 ist mit $i_{SL_k}$ bzw. $q_{SL_k}$ bezeichnet. Der Koeffizient a wird von der Auswerteschaltung in figur 8 geliefert.

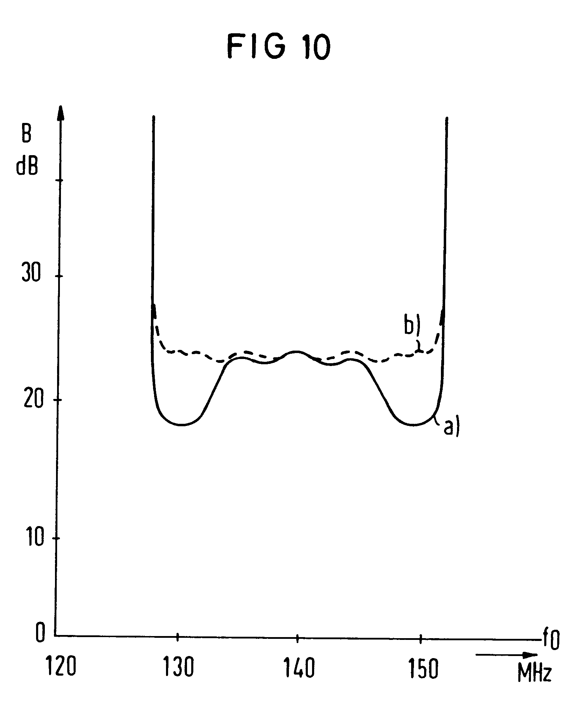

Figur 10 zeigt in einer grafischen Darstellung Signaturen für ein 64-QAM-System mit Rolloff $\alpha = 0{,}35$. In Abhängigkeit von der Frequenz ist eine Dämpfung B (Notchtiefe) in Dezibel aufgetragen. Dabei zeigt Kurve a die Signatur für einen 9-Tap-Zeitbereichsentzerrer (ATDE) ohne Schräglagenentzerrer und Kurve b für einen entsprechenden ATDE mit einem volldigital realisierten Schräglagenentzerrer. Bei Kurve b ist eine deutliche Verbesserung der Signatur erkennbar.

## Patentansprüche

1. Adaptiver Frequenzbereichsentzerrer für Digital-Richtfunksysteme, bei dem ein Transversalfilter mit einstellbaren Koeffizienten und Mittel zur Spektrumsauswertung zur Einstellung der Koeffizienten vorgesehen sind, **gekennzeichnet** durch seine digitale Realisierung mit Hilfe eines Transversalfilters (8) mit einer Laufzeit zwischen aufeinanderfolgenden Abgriffen von $\tau = T/2$ und durch eine mit ihm verbundene Steuerschaltung (10) zur Einstellung des Stellgliedes des Transversalfilters mit Meßsonden für unterschiedliche Spektralanteile, zu deren Realisierung Schaltelemente eingesetzt werden, die einen für die Messung verwendeten DFT-Algorithmus (Discrete Fourier Transform) implementieren.

2. Frequenzbereichsentzerrer nach Anspruch 1, **dadurch gekennzeichnet,** daß die Schaltungsoperationen im Basisband (I, Q) ausgeführt werden.

3. Frequenzbereichsentzerrer nach Anspruch 1 oder 2, **dadurch gekennzeichnet,** daß der DFT-Algorithmus eine 4-Punkte-DFT ist.

**4.** Frequenzbereichsentzerrer nach Anspruch 1, 2 oder 3, **dadurch gekennzeichnet,** daß als Regelkriterium für die Einstellung des Stellgliedes die Leistungsdifferenz der beiden Sondenfilter in der Steuerschaltung (10) verwendet wird.

**5.** Frequenzbereichsentzerrer nach Anspruch 4, **dadurch gekennzeichnet,** daß die Leistungsdifferenz in einem Akkumulator (46) aufintegriert wird, dessen Ausgangswert den Koeffizienten für die Entzerrereinstellung liefert.

**6.** Frequenzbereichsentzerrer nach einem der Ansprüche 1 bis 5, **gekennzeichnet** durch seine Ausbildung als linearphasiger Schräglagenentzerrer mit drei Abgriffen.

**7.** Frequenzbereichsentzerrer nach einem der vorhergehenden Ansprüche, **dadurch gekennzeichnet,** daß er dezimierend ausgelegt ist in Anpassung an einen nachgeschalteten adaptiven Zeitbereichsentzerrer (11), der eine Signalverarbeitung im Symboltakt ausführt (baudspaced).

## Claims

**1.** Adaptive frequency domain equalizer for digital microwave radio systems, in which a transversal filter with adjustable coefficients and means for spectrum analysis for setting the coefficients are provided, characterized by its digital implementation using a transversal filter with a delay time between successive taps of $\tau = T/2$ and by a control circuit which is connected thereto for setting the actuator of the transversal filter with measurement probes for different spectrum portions, to implement which switching elements are used which apply a DFT algorithm (Discrete Fourier Transform) used for measurement.

**2.** Frequency domain equalizer according to Claim 1, characterized in that the switching operations are carried out in the baseband (I, Q).

**3.** Frequency domain equalizer according to Claim 1 or 2, characterized in that the DFT algorithm is a 4-point DFT.

**4.** Frequency domain equalizer according to Claim 1, 2 or 3, characterized in that the control criterion used for setting the actuator is the difference in power between the two probe filters in the control circuit.

**5.** Frequency domain equalizer according to Claim 4, characterized in that the difference in power is integrated into an accumulator whose output value supplies the coefficient for the setting of the equalizer.

**6.** Frequency domain equalizer according to one of Claims 1 to 5, characterized by its design as a linear-phase slope equalizer with three taps.

**7.** Frequency domain equalizer according to one of the preceding claims, characterized in that it is of decimating configuration to match an adaptive time domain equalizer which is connected downstream and carries out signal processing with the symbol clock (baud-spaced).

## Revendications

**1.** Égaliseur adaptatif dans le domaine des fréquences pour des systèmes numériques à faisceau hertzien et dans lequel sont prévus un filtre transversal à coefficients réglables et des moyens d'évaluation du spectre pour le réglage des coefficients, caractérisé par sa réalisation numérique à l'aide d'un filtre transversal (8) ayant un temps de retard entre des prises successives, égal à $\tau = T/2$, et par un circuit de commande (10) qui est raccordé à ce filtre et sert à régler le circuit de réglage du filtre transversal et comportant des sondes de mesure pour des composantes spectrales différentes, et pour la réalisation duquel on utilise des éléments de circuit, qui mettent en oeuvre un algorithme DFT (Discrete Fourier Transform, c'est-à-dire transformée de Fourier discrète) utilisé pour la mesure.

**2.** Égaliseur dans le domaine des fréquences suivant la revendication 1, caractérisé par le fait que les opérations des circuits sont réalisées dans la bande de base (I, Q).

3. Égaliseur dans le domaine des fréquences suivant la revendication 1 ou 2, caractérisé par le fait que l'algorithme DFT est un algorithme DFT en 4 points.

4. Égaliseur dans le domaine des fréquences suivant la revendication 1, 2 ou 3, caractérisé par le fait qu'on utilise comme critère de réglage du circuit de réglage, la différence de puissance des deux filtres-sondes dans le circuit de commande (10).

5. Égaliseur dans le domaine des fréquences suivant la revendication 4, caractérisé par le fait que la différence de puissance est intégrée dans un accumulateur (46), dont la valeur de sortie fournit le coefficient pour le réglage de l'égaliseur.

6. Égaliseur dans le domaine des fréquences suivant l'une des revendications 1 à 5, caractérisé par sa réalisation sous la forme d'un égaliseur de correction de positions obliques à phase linéaire comportant trois prises.

7. Égaliseur dans le domaine des fréquences suivant l'une quelconque des revendications précédentes, caractérisé par le fait qu'il est conçu de manière à réaliser une décimation, d'une manière adaptée à un égaliseur (11) dans la plage temporelle, qui est branché en aval et qui effectue un traitement des signaux à la cadence des symboles (baudspaced).

# FIG 1

EP 0 524 541 B1

**FIG 2**

**FIG 3**

**FIG 4**

# FIG 5

# FIG 7

# FIG 6a

# FIG 6 b

# FIG 8

Akku mit
Sättigung
bei ± ½

# FIG 9

# FIG 10